# EUROPÄISCHE PATENTSCHRIFT

(11) **EP 1 229 266 B1**
(45) Veröffentlichungstag und Bekanntmachung des Hinweises auf die Patenterteilung: **15.09.2004**
(21) Anmeldenummer: 01126915.6
(22) Anmeldetag: 13.11.2001
(51) Int. Cl.: F16D 65/12

(54) **Gebaute Bremsscheibe, insbesondere für ein Kfz**
Assembled brake disc, especially for vehicles
Disque de frein assemblé, particulièrement pour véhicules

(30) Priorität: 31.01.2001 DE 10104039
(43) Veröffentlichungstag der Anmeldung: 07.08.2002
(73) Patentinhaber: Bayerische Motoren Werke Aktiengesellschaft, 80809 München (DE)
(72) Erfinder: Kirmse, Stefan, 82541 Münsing (DE); Blechinger, Gerd, 81927 München (DE)

(56) Entgegenhaltungen:
- DE-U- 29 710 533
- GB-A- 1 526 204
- US-A- 2 375 566

## Beschreibung

Die Erfindung betrifft eine gebaute Bremsscheibe, insbesondere für ein Kfz, mit zwei Reibringen, zwischen denen eine Mitnehmerscheibe zur Übertragung des Bremsmomentes angeordnet ist, und wobei die Reibringe von Befestigungselementen durchdrungen sind, welche die Reibringe in Axialrichtung an der Mitnehmerscheibe halten. Zum technischen Umfeld wird neben der EP-0 015 993 B1 auf die DE-AS 1 625 827 verwiesen.

Die DE 297 10 533 U1 wird als gattungsbildendes Dokument angesehen. Gebaute Fzg.-Bremsscheiben insbesondere in innenbelüfteter Ausführung sind in unterschiedlichsten Ausführungsformen bekannt, wobei jüngere Entwicklungen tendenziell dahin gehen, dass die Reibringe der Bremsscheibe sowie ein sog. Anbindungselement zur Befestigung derselben an einem Fzg.-Radträger aus unterschiedlichen Werkstoffen gefertigt sind. Bekannt ist es bspw., an einem Reibring direkt oder über gleitende Zwischenelemente einen sog. Bremsscheiben-Topf anzuschrauben, oder diese Verbindung zwischen Topf und Reibring als Reibschweißfügung auszuführen.

Grundsätzlich muss der bzw. müssen die Reibringe einer Bremsscheibe neben ihrer Primärfunktion, nämlich der Aufnahme von Bremsenergie, auch die Weiterleitung des Bremsmomentes bewerkstelligen. Es ist vorteilhaft, wenn die letztgenannte Funktion - wie im eingangs erst-und zwei genannten Stand der Technik gezeigt - nicht von den Reibringen direkt, sondern von einem zusätzlichen Element, nämlich der sog. Mitnehmerscheibe übernommen wird, insbesondere wenn die Reibringe aus einem anderen Material bestehen, als der sog. Bremsscheibentopf, über welchen insbesondere Kfz-Bremsscheiben üblicherweise am Radträger des Fahrzeugs befestigt sind. Dann kann nämlich der Einsatz dieses besonderen Reibring-Materials auf den eigentlichen Reibring-Bereich, der mit den Reibungs-Bremsbelägen zusammenwirkt, beschränkt bleiben. Die Bremsmomentübertragung auf das Fzg-Rad erfolgt dann über die aus einem hierfür geeigneteren Material bestehende Mitnehmerscheibe.

Selbstverständlich ist es hierfür erforderlich, die Reibringe der Bremsscheibe geeignet an der sog. Mitnehmerscheibe zu befestigen. Nun handelt es sich bei einer Bremsscheibe, insbesondere einer solchen für Fahrzeuge, um ein mechanisch und zeitweise auch thermisch hoch beanspruchtes Bauteil, welches gleichzeitig in hoher Stückzahl kostengünstig herstellbar sein soll. Der bekannte Stand der Technik nach der eingangs zweitgenannten DE-AS 1 625 827, ist bereits in der eingangs erstgenannten EP 0 015 993 B1 abgehandelt. Demnach ist eine Bremsscheibe nach der DE-AS 1 625 827 in ihrer Herstellung und Zuverlässigkeit problematisch. Hingegen erfordert die aus der EP 0 015 993 B1 bekannte Bremsscheibe eine spezielle Formgebung sowohl für die Mitnehmerscheibe als auch für die Reibringe, weshalb sämtliche Bauelemente nur als Feinstanzteile gefertigt werden können. Damit ist man aber bezüglich der Werkstoffauswahl wieder auf spezielle Werkstoffe, insbesondere Stähle, beschränkt.

Die Gattungsbildende DE 29710533 U1 offenbart eine Bremsscheibe des Oberbegriffs des Anspruchs 1

Hier soll nun eine hinsichtlich Stabilität und Langzeitverhalten verbesserte Bremsscheibe nach dem Oberbegriff des Anspruchs 1 aufgezeigt werden, die den Einsatz unterschiedlichster Werkstoffe ermöglicht so dass unterschiedliche Wärmedehnungen von Reibringen und der Mitnehmerscheibe einfach ausgeglichen werden können (= Aufgabe der vorliegenden Erfindung). Die Lösung dieser Aufgabe ist dadurch gekennzeichnet, dass die Distanzstücke in radial langlochartige Durchbrüche der Mitnehmerscheibe eingesetzt sind. Vorteilhafte Aus- und Weiterbildungen sind Inhalt der Unteransprüche.

Die sog. Distanzstücke, welche die kraft- bzw. moment-übertragende Verbindung zwischen den Reibringen und der Mitnehmerscheibe bewirken, befinden sich im eigentlichen Reibringbereich, in welchem auch die Reibungs-Bremsbeläge angreifen. Zwischen dem Entstehungsort des Bremsmomentes und der Übertragungsstelle auf die Mitnehmerscheibe liegt somit kein nennenswerter Hebelarm vor, der eine ungünstige multiplikative Steigerung der zu übertragenden Kräfte bewirkt. Dabei erfolgt die Kraft- bzw.- Momentenübertragung zwischen den Reibringen und der Mitnehmerscheibe nicht mehr über die Befestigungselemente, sondern über sog. Distanzstücke, die zwischen den Reibringen vorgesehen und dabei bevorzugt zwischen diesen eingespannt sind.

Diese Distanzstücke können nun optimal hinsichtlich ihrer Funktion ausgelegt werden. Örtlich festgelegt bzw. an der gewünschten Stelle gehalten werden können die Distanzstücke, die bevorzugt hülsenartig ausgebildet sind, durch die Befestigungselemente, wenn diese (zumindest teilweise) durch die Distanzstücke hindurchgeführt sind. Dabei sind die Distanzstücke in langlochartige (und sich dabei im wesentlichen in Radialrichtung erstreckende) Durchbrüche in der Mitnehmerscheibe eingesetzt, so dass unterschiedliche Wärmedehnungen von Reibringen und der Mitnehmerscheibe einfach ausgeglichen werden könner d.h. die Distanzstücke können in Radialrichtung in den Durchbrüchen gleiten.

Wenn dabei die langlochartigen Durchbrüche der Mitnehmerscheibe einen in Umfangsrichtung der Bremsscheibe betrachtet breiteren Abschnitt und einen sich hieran bevorzugt radial nach außen anschließenden Abschnitt geringerer Breite aufweisen, so wird der Zusammenbau der Bremsscheibe vereinfacht, da es insbesondere dann, wenn die Distanzstücke mit geeigneten Bunden oder dgl. versehen sind, möglich ist, zunächst die Distanzstücke in die Durchbrüche der Mitnehmerscheibe einzuhängen oder einzuklemmen, wonach beidseitig die Reibringe montiert werden können.

Wenn die Enden der Distanzstücke zapfenförmig ausgebildet sind und formschlüssig in entsprechende Aufnahmen in den Reibring-Innenseiten eingreifen, so ist sichergestellt, dass die Übertragung des Bremsmomentes von den Reibringen auf die Mitnehmerscheibe nur über die Distanzstücke erfolgt, so dass die Befestigungselemente sicher nicht mit Scherkräften beaufschlagt werden. Dabei ist dieser Eingriff der Distanzstück-Enden in die Reibring-Aufnahmen in Form einer Presspassung oder einer Übergangspassung oder einer Spielpassung möglich. Letzteres ist zu bevorzugen, wenn sich die Materialien für die Distanzstücke und für die Reibringe in ihrem Wärmeausdehnungsverhalten wesentlich unterscheiden.

Zum Übertragen der Axialkräfte können die Distanzstücke zwischen den zapfenförmigen Enden jeweils mit einem Abstütz-Bund versehen sein, an dem jeweils ein Reibring mit seiner Innenseite zum Anliegen kommt. Dadurch ist sichergestellt, dass die Reibringe plan auf den Distanzstücken aufliegen und durch die Befestigungselemente keine unerwünschte zusätzliche Verspannung erfolgt.

Um die mechanische Belastung jedes einzelnen Distanzstückes gering zu halten, empfiehlt es sich, relativ viele Distanzstücke mit Befestigungselementen über dem Reibringumfang verteilt anzuordnen. Um dabei die gegeneinander verspannten Reibringe gleichmäßig aufeinander abzustützen und um weiterhin die durch die Befestigungselemente gebildeten sog. Störstellen im mit den Reibungs-Bremsbelägen zusammenwirkenden Reibring-Bereich möglichst gleichmäßig zu verteilen, können in Radialrichtung der Bremsscheibe betrachtet zumindest zwei Reihen von Befestigungselementen mit Distanzstücken vorgesehen sein, d.h. die Distanzstücke können auf verschiedenen Teilkreisen angeordnet sein.

Um eine Innenbelüftung der Bremsscheibe zu ermöglichen und auch im Hinblick auf eine Gewichtsreduktion muss die sog. Mitnehmerscheibe keine vollflächige, sich über die gesamte Reibringfläche erstreckende Scheibe sein, sondern kann von ihrem Zentrum oder zentralen Ringabschnitt aus sich sternförmig in Radialrichtung erstreckende sog. Mitnehmerfinger aufweisen, in denen dann die genannten Durchbrüche, in welche die Distanzstücke zur Bremsmomentübertragung von den Reibringen auf die Mitnehmerscheibe eingreifen, vorgesehen sind. Dabei müssen nicht sämtliche Distanzstücke zwischen den beiden Bremsscheiben-Reibringen in Durchbrüche in den Mitnehmerfingern der Mitnehmerscheibe eingesetzt sein. Vielmehr können - in Umfangsrichtung betrachtet - auch zwischen den Mitnehmerfingern solche Distanzstücke vorgesehen, die dann aber kein Bremsmoment auf die Mitnehmerscheibe übertragen können. Vielmehr dienen diese zusätzlichen Distanzstücke, die sich auch auf verschiedenen Teilkreisen befinden können, der optimalen Abstützung der beiden Reibringe aufeinander.

Was die Befestigungselemente betrifft, so können diese - insbesondere wenn diese wie vorgeschlagen durch die Distanzstücke hindurchgeführt sind - analog dem bekannten Stand der Technik als Nieten ausgebildet sein, was eine sichere und relativ kostengünstige Lösung darstellt. Es ist jedoch auch der Einsatz von Schrauben möglich, wobei dann die Distanzstücke im Sinne einer vorteilhaften Funktionsvereinigung gleichzeitig als Schraubenmutter fungieren können. Ferner können die Distanzstücke selbst die Funktion der Befestigungselemente übernehmen, und zwar bspw. in Form einer Nietverbindung, indem die Endabschnitte der Distanzstücke durch die Reibringe hindurchgeführt und endseitig zu Nietköpfen umgeformt sind. Ferner besteht die Möglichkeit, die Distanzstücke geeignet fest mit den Reibringen zu verbinden, womit letztere ebenfalls von den als Befestigungselemente wirkenden Distanzstücken an der Mitnehmerscheibe gehalten werden. Diese genannte feste Verbindung zwischen den Distanzstücken und den Reibringen kann bspw. durch Kleben oder Schweißen oder Einpressen erfolgen.

Was die drehmoment- bzw. bremsmomentübertragende Verbindung zwischen der Mitnehmerscheibe und dem eigentlich abzubremsenden Element, nämlich dem Rad oder Radträger des Fahrzeugs betrifft, so kann die Mitnehmerscheibe direkt am Rad oder Radträger bevorzugt lösbar befestigt sein. Alternativ ist es möglich, die Mitnehmerscheibe auf geeignete Weise an einem bislang insbesondere bei PKW-Bremsscheiben üblichen Bremsscheibentopf anzubinden, bspw. über eine Reibschweißverbindung. Im übrigen kann die Mitnehmerscheibe im Bereich der Befestigung am Rad oder Radträger eben ausgebildet sein oder einen ausgeformten Bremsscheibentopf aufweisen.

Bei Verwendung eines eigenständigen Bremsscheibentopfes, der auf geeignete Weise (bspw. durch Reibschweißen) mit der Mitnehmerscheibe verbunden ist, kann dieser aus Aluminium oder einer anderen, das Gewicht reduzierenden Leichtmetalllegierung, aber auch aus Stahl oder Edelstahl bestehen. Vorteilhaft ist auch ein Bremsscheibentopf aus Carbon, wenn dieser an eine Carbon-Mitnehmerscheibe angeformt ist. Alternativ kommen für diese Mitnehmerscheibe, ebenso wie für die Distanzstücke und/oder die Befestigungselemente Stahlwerkstoffe, Edelstähle oder Aluminium-(Legierungen) als Werkstoffe in Frage. Die Reibringe der Bremsscheibe hingegen können aus Stahl oder Edelstahl oder gegebenenfalls faserverstärkter Keramik oder einem Buntmetall bestehen.

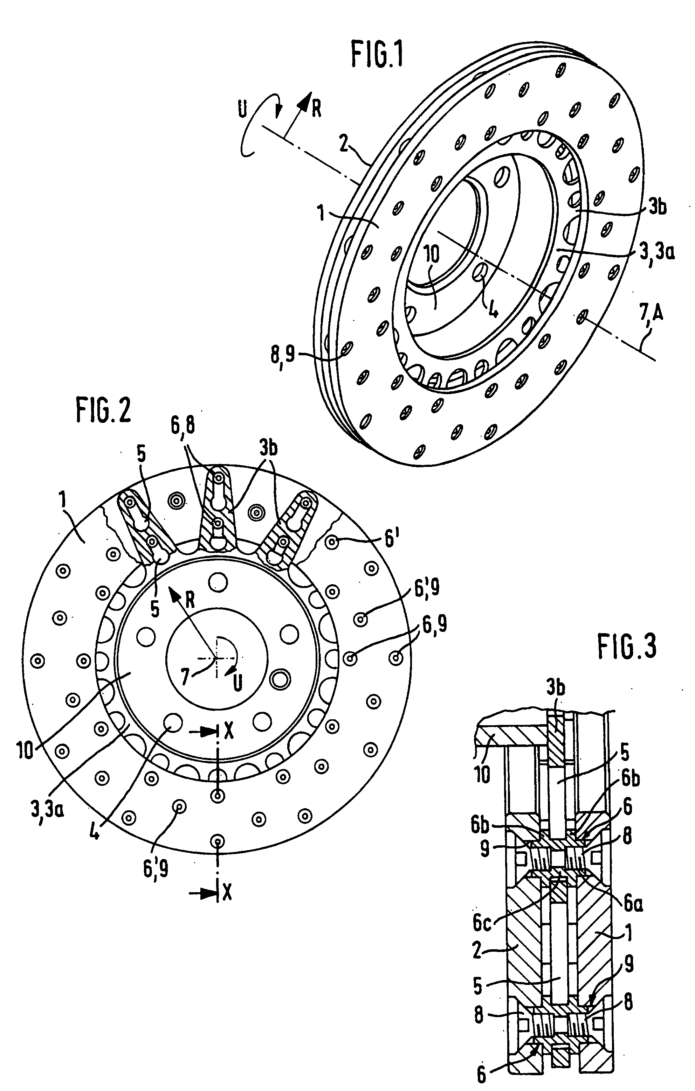

Im folgenden wird die Erfindung anhand eines bevorzugten Ausführungsbeispieles weiter erläutert, wobei die beigefügte **Figur 1** eine räumliche Ansicht einer erfindungsgemäßen gebauten Bremsscheibe zeigt, von der in **Figur 2** die Aufsicht mit teilweise aufgebrochenem Reibring und in **Figur 3** der Schnitt X-X aus Fig.2 dargestellt ist. Erfindungswesentlich können dabei sämtliche näher beschriebenen Merkmale sein.

Mit der Bezugsziffer 1 ist der erste Reibring und mit der Bezugsziffer 2 der zweite Reibring einer gebauten Bremsscheibe insbesondere für einen PKW bezeichnet, die - wie üblich - parallel zueinander und senkrecht zur Axialrichtung A angeordnet sind und zwischen denen sich eine Mitnehmerscheibe 3 zur Übertragung des Bremsmomentes auf ein nicht dargestelltes FahrzeugRad befindet. Hierfür ist an die Mitnehmerscheibe 3 bspw. durch Reibschweißen ein Bremsscheibentopf 10 angeformt, in dem Durchstecköffnungen 4 für nicht gezeigte Schraubenbolzen vorgesehen sind, mittels derer der Bremsscheibentopf 10 am nicht dargestellten Radträger des Fahrzeugs angeflanscht werden kann.

Die Mitnehmerscheibe 3 weist neben einem zentralen Ringabschnitt 3a, an welchen der Bremsscheibentopf 10 angebunden ist, sich von diesem Ringabschnitt 3a sternförmig in Radialrichtung R nach außen erstreckende sog. Mitnehmerfinger 3b auf, in denen (hier) in zwei Radienabschnitten quasi hintereinander liegend radial langlochartige Durchbrüche 5 vorgesehen sind (vgl. **Fig.2**). Jeder Durchbruch 5 nimmt ein hülsenförmiges Distanzstück 6 auf, wobei sich die Längsachsen der in ihrer Grundstruktur zylindrischen bzw. abschnittsweise kreiszylindrischen Distanzstücke 6 senkrecht zur Ebene der Mitnehmerscheibe 3 und somit parallel zur Drehachse 7 in Axialrichtung A der Bremsscheibe erstrecken.

Die Distanzstücke 6 sind zwischen den parallel zur Mitnehmerscheibe 3 und beidseitig derselben angeordneten Reibringen 1, 2 eingespannt, und zwar mittels sog. Befestigungselemente 8, von denen jeweils eines ein zugeordnetes hülsenförmiges Distanzstück 6 durchdringt, und zwar in einer Durchgangsbohrung 6a desselben. Sowohl die Durchgangsbohrung 6a als auch jedes Befestigungselement 8 erstreckt sich somit senkrecht zur Ebene der Mitnehmerscheibe 3 parallel zur Drehachse 7.

Die Befestigungselemente 8 durchdringen dabei auch die Reibringe 1, 2 in geeignet geformten Durchtrittsbohrungen 9, so dass auf einfache Weise die Distanzstücke 6 zwischen den Reibringen 1, 2 eingespannt werden können. Beim hier dargestellten Ausführungsbeispiel sind die Befestigungselemente 8 als Schrauben ausgebildet, die jeweils von der Außenseite eines Reibringes 1 bzw. 2 durch die Durchtrittsbohrungen 9 hindurch in das zugeordnete, hier gleichzeitig als Mutter ausgebildete Distanzstück 6 eingeschraubt sind. Je Distanzstück 6 sind hier also zwei Befestigungselemente 8 vorgesehen, die dann (naturgemäß) das Distanzstück 6 nicht vollständig durchdringen. In einer alternativen Ausführungsform der Erfindung können die Befestigungselemente 8 aber auch als Nieten oder dgl. ausgebildet sein, wobei je Distanzstück 6 dann ein einziges derartiges Befestigungselement 8 vorgesehen ist, das dann vollständig durch das zugeordnete Distanzstück 6 hindurchgeführt ist, und dessen Nietköpfe oder dgl. sich an den Außenseiten der beiden Reibringe 1, 2 befinden. (Weitere alternative Ausführungsformen für die Befestigungselemente, so insbesondere selbst als Nieten ausgebildete Distanzstücke oder in die Reibringe eingepresste oder mit diesen verklebte Distanzstücke wurden bereits vor diesem Ausführungsbeispiel erläutert).

Zurückkommend auf die Figuren 1 - 3 sind die Distanzstücke 6 an ihren beiden Enden zapfenförmig ausgebildet und greifen mit diesen zapfenförmigen kreiszylindrischen Enden in die Durchtrittsbohrungen 9 oder allg. entsprechend gestaltete Aufnahmen (ebenfalls mit der Bezugsziffer 9 versehen) in den Innenseiten der Reibringe 1, 2 ein. Mit sich an diese zapfenförmigen Enden anschließenden (bevorzugt kreiszylindrischen) Bunden 6b liegen die Distanzstücke 6 an den einander zugewandten Innenseiten oder Innenflächen der Reibringe 1 bzw. 2 an. Somit können sich die Reibringe 1, 2 in Axialrichtung A optimal an den Distanzstücken 6 abstützen.

Zwischen den beiden Bunden 6b der Distanzstücke 6 ist der Außendurchmesser jedes hülsenförmigen und dabei abschnittsweise (und somit auch in diesem zwischen den Bunden 6b liegenden Abschnitt 6c) kreiszylindrischen Distanzstückes 6 gegenüber den Bunden 6b verringert, so dass sie mit diesem letztgenannten Abschnitt 6c in den Durchbrüchen 5 in den Mitnehmerfingern 3b der Mitnehmerscheibe 3 quasi eingehängt sind. Wie ersichtlich liegen dabei die Bunde 6b auch an den beiden Stirnflächen der Mitnehmerfinger 3b bzw. der Mitnehmerscheibe 3 an. Solchermaßen "eingehängt" werden können die Distanzstücke 6 in die zugeordneten Durchbrüche 5, weil die Durchbrüche 5 radial weiter innen liegend zunächst einen in Umfangsrichtung U der Bremsscheibe betrachtet breiteren Abschnitt und sich an diesen radial nach außen anschließend einen Abschnitt geringerer Breite aufweisen. An den breiteren Stellen der Durchbrüche 5 können somit die Distanzstücke 6 in den jeweiligen Durchbruch 5 eingesteckt werden, wobei einer der beiden Bunde 6b hindurch gesteckt wird, wonach dieses soweit eingesteckte Distanzstück 6 in Radialrichtung R nach außen in die figürlich dargestellte Position geschoben wird und in dieser - aufgrund der geringeren Breite - nicht mehr herausfallen kann. Sind an einer Mitnehmerscheibe 3 sodann sämtliche Distanzstücke 6 in der beschriebenen Weise montiert, so können beidseitig der Mitnehmerscheibe 3 die beiden Reibringe 1, 2 auf die freien Enden der Distanzstücke 6 aufgesetzt werden. Abschließend werden die Befestigungselemente 8 angebracht.

Aufgrund der Gestaltung der Durchbrüche 5 als sich in Radialrichtung R erstreckende Langlöcher sind im übrigen unterschiedliche Wärmeausdehnungen kompensierbar, d.h. in den Mitnehmerfingern 3b können sich die Distanzstücke 6 in den der thermischen Reibringausdehnung entsprechenden Grenzen radial frei bewegen.

Wie ersichtlich, sind hier in Radialrichtung R betrachtet zwei Reihen von über dem Umfang U im gleichmäßig verteilten Distanzstücken 6 vorgesehen, die in den Mitnehmerfingern 3b der Mitnehmerscheibe 3 eingehängt sind. Darüber hinaus sind zwischen den Mitnehmerfingern 3b weitere Distanzstücke 6' vorgesehen, die mit Ausnahme der Mitnehmerfinger 3b in der gleichen Weise wie für die Distanzstücke 6 beschrieben, zwischen den Reibringen 1, 2 eingespannt sind. Diese weiteren abseits der Mitnehmerfinger 3b ebenfalls auf unterschiedlichen Teilkreisradien liegenden Distanzstücke 6' dienen insbesondere der Versteifung des Reibring-Verbundes. Dabei ist die Anordnung sämtlicher Distanzstücke 6 und 6' so gewählt, dass die Reibringe 1, 2 gleichmäßig unterstützt werden und die vom an den Reibringen 1, 2 angreifenden Bremsbelägen nicht erfassten Durchtrittsöffnungen 9 im wesentlichen gleichmäßig über die vom Bremsbelag überstrichene Fläche verteilt sind.

Selbstverständlich können eine Vielzahl von Details insbesondere konstruktiver Art durchaus abweichend vom gezeigten Ausführungsbeispiel gestaltet sein, ohne den Inhalt der Patentansprüche zu verlassen. Stets zeichnet sich eine erfindungsgemäße gebaute Bremsscheibe durch eine Reihe von Vorteilen aus, als da sind:
- optimale Ausnutzung des Reibringmaterials, da dieses nur für den Bereich der vom Bremsbelag überstrichenen Fläche erforderlich ist
- für die jeweilige Funktion sind jeweils optimale Werkstoffe einsetzbar
- es ist ein Plattenmaterial als Halbzeug für die Reibringe möglich
- für die Eignung als Reibringwerkstoff ist die Gießbarkeit keine Voraussetzung
- es ist Leichtbau durch optimale Werkstoffwahl möglich
- es ist nahezu Verschleißfreiheit durch entsprechende Wahl des Reibringwerkstoffs (z.B. CSiC) erzielbar
- es ist Korrosionsfreiheit durch entsprechende Wahl der Werkstoffe erzielbar (bspw. mit Reibringen aus Edelstahl)
- bei den beiden Reibringen handelt es sich um Gleichteile
- die Bremsscheiben lassen sich praktisch sortenrein zerlegen
- somit ist eine Weiternutzung einzelner Komponenten nach Aufbereitung möglich
- es liegt Symmetrie der Reibringe und der Reibringanbindung vor
- es ist eine radial freie Reibringanbindung realisiert
- es baut sich keine thermische Schirmung auf
- es besteht ein weiter Gestaltungsspielraum.

### Bezugszeichenliste:

- 1: (erster) Reibring
- 2: (zweiter) Reibring
- 3: Mitnehmerscheibe
- 3a: zentraler Ringabschnitt
- 3b: Mitnehmerfinger
- 4: Durchstecköffnung
- 5: Durchbruch (in 3b)
- 6, 6': Distanzstück
- 6a: Durchgangsbohrung
- 6b: Bund
- 6c: Mitten-Abschnitt
- 7: Drehachse der Bremsscheibe
- 8: Befestigungselement
- 9: Durchtrittsöffnung (für 8 in 1, 2) = Aufnahme (für 6 in 1, 2)
- 10: Bremsscheibentopf
- A: Axialrichtung
- R: Radialrichtung
- U: Umfangsrichtung

## Patentansprüche

1. Gebaute Bremsscheibe, insbesondere für ein Kfz, mit zwei Reibringen, zwischen denen eine Mitnehmerscheibe (3) zur Übertragung des Bremsmomentes angeordnet ist, und wobei die Reibringe (1, 2) von Befestigungselementen (8) durchdrungen sind, welche die Reibringe in Axialrichtung (A) an der Mitnehmerscheibe (3) halten, und wobei
zwischen den beiden Reibringen (1, 2) im mit Reibungs-Bremsbelägen zusammenwirkenden Bereich Distanzstücke (6) vorgesehen sind, **dadurch gekennzeichnet, dass** die Distanzstücke in radial langlochartige Durchbrüche (5) der Mitnehmerscheibe (3) eingesetzt sind

2. Bremsscheibe nach Anspruch 1,
**dadurch gekennzeichnet, dass** die langlochartigen Durchbrüche (5) der Mitnehmerscheibe (3) einen in Umfangsrichtung (U) der Bremsscheibe betrachtet breiteren Abschnitt und einen sich hieran radial nach außen anschließenden Abschnitt geringerer Breite aufweisen.

3. Bremsscheibe nach Anspruch 1 oder 2,
**dadurch gekennzeichnet, dass** in Radialrichtung (R) betrachtet zumindest zwei Reihen von Distanzstücken (6) vorgesehen sind.

4. Bremsscheibe nach einem der vorangegangenen Ansprüche,
**dadurch gekennzeichnet, dass** die Enden der Distanzstücke (6) zapfenförmig ausgebildet sind und formschlüssig in entsprechende Aufnahmen (9) in den Reibring-Innenseiten eingreifen

5. Bremsscheibe nach Anspruch 4,
**dadurch gekennzeichnet, dass** sich an die zapfenförmigen Enden der Distanzstücke (6) jeweils ein Bund (6b) anschließt, an dem ein Reibring (1, 2) mit seiner Innenseite zum Anliegen kommt.

6. Bremsscheibe nach einem der vorangegangenen Ansprüche,
**dadurch gekennzeichnet, dass** die Mitnehmerscheibe (3) von ihrem zentralen Ringabschnitt (3a) sternförmig sich in Radialrichtung (R) erstreckende Mitnehmerfinger (3b) aufweist, in denen die langlochartigen Durchbrüche (5) vorgesehen sind.

7. Bremsscheibe nach einem der vorangegangenen Ansprüche,
**dadurch gekennzeichnet, dass** die Befestigungselemente (8) durch die Distanzstücke (6) gebildet werden oder durch diese hindurchgeführt sind.

8. Bremsscheibe nach einem der vorangegangenen Ansprüche,
**dadurch gekennzeichnet, dass** die Befestigungselemente (8) als Nieten oder Schrauben ausgebildet sind.

9. Bremsscheibe nach Anspruch 8,
**dadurch gekennzeichnet, dass** als Befestigungselemente (8) Schrauben vorgesehen sind, wobei das zugeordnete Distanzstück (6) als Schraubenmutter fungiert.

10. Bremsscheibe nach einem der vorangegangenen Ansprüche,
**dadurch gekennzeichnet, dass** die Mitnehmerscheibe (3) in ihrem zentralen Ringabschnitt (3a) mit einem Bremsscheibentopf (10) verbunden oder direkt mit einem Fahrzeug-Radträger verbindbar ist.

11. Bremsscheibe nach einem der vorangegangenen Ansprüche,
**dadurch gekennzeichnet, dass** die Reibringe (1, 2) aus Stahl oder Edelstahl oder gegebenenfalls faserverstärkter Keramik oder einem Buntmetall bestehen.

12. Bremsscheibe nach einem der vorangegangenen Ansprüche,
**dadurch gekennzeichnet, dass** die Mitnehmerscheibe (3) und/oder die Distanzstücke (6) und/oder die Befestigungselemente (8) aus Stahl oder Edelstahl oder Carbon oder einer Leichtmetalllegierung bestehen.

## Claims

1. An assembled brake disc, especially for a motor vehicle, comprising two friction rings, between which a driver plate (3) for transmitting the braking moment is arranged, and wherein the friction rings (1, 2) are penetrated by fastening elements (8) which hold the friction rings in the axial direction (A) on the driver plate (3), and wherein spacers (6) are provided between the two friction rings (1, 2) in the region cooperating with friction brake linings, **characterised in that** the spacers are inserted in radially slot-type openings (5) of the driver plate (3).

2. A brake disc according to claim 1, **characterised in that** the slot-like openings (5) of the driver plate (3) have a wider section viewed in the peripheral direction (U) of the brake disc, and a section which adjoins this radially outwardly, with a smaller width.

3. A brake disc according to claim 1 or 2, **characterised in that**, viewed in the radial direction (R), at least two rows of spacers (6) are provided.

4. A brake disc according to any one of the preceding claims, **characterised in that** the ends of the spacers (6) are pin-shaped in design and engage in an interlocking manner in corresponding receivers (9) in the insides of the friction rings.

5. A brake disc according to claim 4, **characterised in that** a respective shoulder (6b), on which a friction ring (1, 2) comes to rest with its inside, adjoins the pin-shaped ends of the spacers (6).

6. A brake disc according to any one of the preceding claims, **characterised in that** the driver plate (3) has driver fingers (3b) which extend in a star shape in the radial direction (R) from its central annular section (3a) and in which the slot-like openings (5) are provided.

7. A brake disc according to any one of the preceding claims, **characterised in that** the fastening elements (8) are formed by the spacers (6) or are guided through them.

8. A brake disc according to any one of the preceding claims, **characterised in that** the fastening elements (8) are formed as rivets or screws.

9. A brake disc according to claim 8, **characterised in that** screws are provided as fastening elements (8), the associated spacer (6) acting as a screw nut.

10. A brake disc according to any one of the preceding claims, **characterised in that** the driver plate (3) is connected in its central annular section (3a) to a brake disc cup (10) or can be directly connected to a vehicle hub carrier.

11. A brake disc according to any one of the preceding claims, **characterised in that** the friction rings (1, 2) comprise steel or special steel or optionally of fibre-reinforced ceramic or a nonferrous heavy metal.

12. A brake disc according to any one of the preceding claims, **characterised in that** the driver plate (3) and/or the associated spacer (6) and/or the fastening elements (8) comprise steel or special steel or carbon or a light metal alloy.

## Revendications

1. Disque de frein assemblé, en particulier pour un véhicule automobile, comportant deux anneaux de friction entre lesquels est monté un disque d'entraînement (3) pour transmettre le couple de freinage, et qui sont traversés par des éléments de fixation (8) les maintenant en direction axiale A sur le disque d'entraînement (3), des pièces d'espacement (6) étant prévues entre les anneaux de friction (1, 2) dans la zone coopérant avec les garnitures de friction,
**caractérisé en ce que**
les pièces d'espacement sont logées dans des ouvertures (5) du disque d'entraînement (3) ayant la forme de trous allongés en direction radiale.

2. Disque de frein selon la revendication 1,
**caractérisé en ce que**
les passages (5) de forme allongée dans le disque d'entraînement (5), observés selon la direction longitudinale (U), présentent une partie plus large suivie radialement vers l'extérieur d'une partie de largeur plus faible.

3. Disque de frein selon la revendication 1 ou 2,
**caractérisé en ce que**
observées selon la direction radiale (R) il est prévu au moins deux rangées de pièces d'espacement (6).

4. Disque de frein selon une des revendications précédentes,
**caractérisé en ce que**
les extrémités des pièces d'espacement (6) ont la forme de tourillons qui sont engagés avec combinaison de formes dans des logements correspondants (9) prévus sur les faces internes des anneaux de friction.

5. Disque de frein selon la revendication 4,
**caractérisé en ce que**
à chaque extrémité en forme de tourillon des pièces d'espacement (6) fait suite un collet (6b) sur lequel vient s'appuyer par sa face interne un anneau de friction (1, 2).

6. Disque de frein selon une des revendications précédentes,
**caractérisé en ce que**
le disque d'entraînement (3) présente, partant en étoile de sa partie annulaire centrale (3a), des doigts d'entraînement (3b) s'étendant en direction radiale (R) et dans lesquels sont prévues des ouvertures (5) en forme de trous allongés.

7. Disque de frein selon les revendications précédentes,
**caractérisé en ce que**
les éléments de fixation (8) sont constitués par les pièces d'espacement (6) ou traversent ces pièces.

8. Disque de frein selon les revendications précédentes,
**caractérisé en ce que**
les éléments de fixation (8) sont des rivets ou des vis.

9. Disque de frein selon la revendication 8,
**caractérisé en ce que**
comme éléments de fixation (8), il est prévu des vis pour lesquelles les pièces d'espacement (6) associées jouent le rôle d'écrous.

10. Disque de frein selon une des revendications précédentes,
**caractérisé en ce que**
le disque d'entraînement (3) est relié à sa partie annulaire centrale (3a) à un pot de disque de frein (10) ou il peut être relié directement à un support de roue de véhicule.

11. Disque de frein selon une des revendications précédentes,
**caractérisé en ce que**
les anneaux de friction (1, 2) sont en acier ou en acier spécial ou le cas échéant en céramique renforcée par des fribres ou en métal non ferreux.

12. Disque de frein selon une des revendications précédentes,
**caractérisé en ce que**
le disque d'entraînement (3) et/ou les pièces d'espacement (6) et les éléments de fixation (8) sont en acier, en acier spécial, en carbone ou en alliage de métal léger.
